# EUROPÄISCHE PATENTSCHRIFT

(11) **EP 4 137 443 B1**
(45) Veröffentlichungstag und Bekanntmachung des Hinweises auf die Patenterteilung: **01.01.2025**
(21) Anmeldenummer: 22188539.5
(22) Anmeldetag: 03.08.2022
(51) Int. Cl.: B66F 9/075, B60B 33/00, B66F 9/06

(54) **STÜTZROLLENEINHEIT FÜR EIN FLURFÖRDERZEUG UND FLURFÖRDERZEUG**
SUPPORT WHEEL UNIT FOR AN INDUSTRIAL TRUCK AND AN INDUSTRIAL TRUCK
UNITÉ DE ROULEAU D'APPUI POUR UN CHARIOT DE MANUTENTION ET CHARIOT DE MANUTENTION

(30) Priorität: 16.08.2021 DE 102021121219
(43) Veröffentlichungstag der Anmeldung: 22.02.2023
(73) Patentinhaber: Jungheinrich Aktiengesellschaft, 22047 Hamburg (DE)
(72) Erfinder: Schüler, Michael, 24558 Wakendorf ll (DE); Lohmann, Helmut, 27404 Gyhum (DE); Brunckhorst, Holger, 22844 Norderstedt (DE); Krenzin, Marcel, 24576 Bad Bramstedt (DE)
(74) Vertreter: Weickmann & Weickmann PartmbB

(56) Entgegenhaltungen:
- DE-A1- 1 575 493
- DE-A1- 102013 100 071
- DE-C1- 4 134 191
- JP-A- H11 180 104

## Beschreibung

Die Erfindung betrifft ein Flurförderzeug, umfassend eine Stützrolleneinheit, diese wiederum umfassend wenigstens eine nicht angetriebene Stützrolle mit einer im Wesentlichen horizontal verlaufenden Rollenachse sowie ein Drehlager mit einer im Wesentlichen vertikal verlaufenden Drehachse, wobei die Rollenachse und die Drehachse mit einem von Null verschiedenen, vorbestimmten Abstand, auch Nachlauf genannt, voneinander angeordnet sind.

Bereits an dieser Stelle sei darauf hingewiesen, dass sich die Orientierungsangaben "horizontal" und "vertikal" auf einen üblichen Betriebszustand des Flurförderzeugs beziehen, in welchem dieses auf einem im Wesentlichen horizontal verlaufenden, ebenen Untergrund aufsteht. Analoges gilt auch für die Begriffe "oben", "unten" und dergleichen.

Gattungsgemäße nicht angetriebene Stützrolleneinheiten mit Nachlauf sind allgemein bekannt. Der Nachlauf, d.h. der vorbestimmte Abstand, den die Rollenachse und die Drehachse voneinander aufweisen, sorgt dafür, dass die unangetriebene Stützrolle stets der Lenkbewegung des Flurförderzeugs folgen kann.

Derartige Stützrolleneinheiten kommen aber auch bei Flurförderzeugen zum Einsatz. Ihre Bauhöhe erschwert jedoch ihren Einsatz bei fahrerlosen Flurförderzeugen, auch AGVs (automated guided vehicles) genannt, welche mit Personenschutz- und/oder Navigations-Scannern ausgestattet sind. Wählt man die Scan-Ebene dieser Scanner so, dass sie auch unbeladene, auf dem Untergrund aufliegende Ladehilfsmittel, beispielsweise Paletten, erkennen können, so ist es erforderlich, die Scanner gleichwohl so anzubringen, dass sie an den Stützrolleneinheiten "vorbeisehen" können. Beispielsweise haben Euro-Paletten eine Höhe von 144 mm. Die Scan-Ebene der Scanner muss also unterhalb von 144 mm, aber oberhalb der Stützrolleneinheiten angeordnet sein.

Dies kann beispielsweise dadurch erreicht werden, dass man die Scanner außerhalb der Fahrzeugkontur anordnet, wie dies beispielsweise aus der WO 2018/136987 A1 bekannt ist. Hieraus resultiert jedoch eine Verbreiterung des Flurförderzeugs, was insbesondere dann nachteilig ist, wenn das Flurförderzeug auch in Blocklagern eingesetzt werden soll. Bei der Blocklagerung handelt es sich dabei um eine Lagerhaltung in einem Warenlager, in dem stapelfähige Kisten, Kartons oder Paletten direkt - ohne Regale oder andere Vorrichtungen - nebeneinander und ggf. übereinander in Blöcken gestapelt werden. Der Abstand der einzelnen Blöcke beträgt hierbei in der Regel nur wenig mehr als die Breite eines Ladehilfsmittels, bei einer Euro-Palette also wenig mehr als 800 mm. Dies stellt eine beträchtliche Randbedingung für die Breite des Flurförderzeugs dar.

Weitere Beispiele für Stützrolleneinheiten mit entsprechenden Drehlagern sind aus der DE 15 75 493 A1 und der DE 41 34 191 C1 bekannt. Der Vollständigkeit halber sei ferner auf die JP H11 180 104 A und die DE 10 2013 100 071 A1 verwiesen.

Das Dokument DE1575493 A1 offenbart die Merkmale des Oberbegriffs des Anspruchs 1.

Will man diese Breite nicht überschreiten, so kann man alternativ die Stützrolleneinheiten soweit zusammenrücken, dass auch die Scanner innerhalb der Fahrzeugkontur angeordnet werden können. Dies hat jedoch eine verringerte Spurbreite zur Folge, so dass das Fahrverhalten des Flurförderzeugs insgesamt instabiler wird.

Es ist daher Aufgabe der vorliegenden Erfindung, eine neuartige Bauweise für unangetriebene Stützrolleneinheiten mit Nachlauf in einem Flurförderzeug bereitzustellen, bei welcher die vorstehend erläuterten Probleme nicht auftreten.

Erfindungsgemäß wird diese Aufgabe durch ein Flurförderzeug, umfassend eine Stützrolleneinheit der eingangs genannten Art, gelöst, bei welcher das Drehlager als Ringdrehlager mit einem äußeren Lagerelement und einem relativ zum äußeren Lagerelement um die Drehachse verdrehbaren inneren Lagerelement ausgebildet ist, bei welcher ein Achsbolzen der wenigstens einen unangetriebenen Stützrolle mittelbar oder unmittelbar an dem inneren Lagerelement des Drehlagers gelagert ist, und bei welcher das Drehlager zumindest teilweise innerhalb der Höhenerstreckung der wenigstens einen unangetriebenen Stützrolle angeordnet ist.

Durch die Kombination dieser Maßnahmen ergibt sich eine in Höhenrichtung kompakte Bauweise der Stützrolleneinheit. Hierdurch können die Stützrolleneinheiten auch dann, wenn die Scan-Ebene auf die Erkennung von unbeladenen, auf dem Untergrund aufstehenden Ladehilfsmitteln ausgelegt ist, vollständig unterhalb der Scan-Ebene angeordnet werden. Dies ermöglicht es, sowohl die Scanner innerhalb der Fahrzeugkontur anzuordnen, als auch für die Anordnung der Stützrollen die volle Fahrzeugbreite auszunutzen, da die Stützrolleneinheiten kein das Scannen beeinträchtigendes Hindernis darstellen.

Es sei darauf hingewiesen, dass die aus der WO 2018/136987 A1 bekannte Anordnung keine Stützrolleneinheit im Sinne der vorliegenden Anmeldung betrifft. Vielmehr offenbart diese Druckschrift eine Einheit mit zwei angetriebenen Rädern, die keinen Nachlauf aufweisen. Daher schneidet die Rotationsachse der angetriebenen Räder die Drehachse des Drehlagers. Auf diese Weise verlaufen die Rotationsachsen der angetriebenen Räder immer in einer vertikalen Symmetrieebene des Drehlagers, was zu einer gleichmäßigen Belastung des Drehlagers führt. Zudem verfügt das aus der WO 2018/136987 A1 bekannte Transportfahrzeug über Scanner, die zumindest teilweise außerhalb der Fahrzeugkontur angeordnet sein müssen, um eine 360°-Rundumsicht zu ermöglichen.

Um eine besonders kompakte Bauweise erzielen zu können, ist gemäß der Erfindung das Drehlager vollständig innerhalb der Höhenerstreckung der wenigstens einen unangetriebenen Stützrolle angeordnet.

Ferner kann die wenigstens eine Stützrolle zu einer vertikalen Symmetrieebene des Ringdrehlagers, welche die Rollenachse orthogonal schneidet, benachbart angeordnet sein oder diese Symmetrieebene durchsetzen, um der Stützrolleneinheit auch in der horizontalen Richtung einen kompakten Aufbau verleihen zu können. Durch diese Bauweise kann nämlich der gesamte Innendurchmesser oder zumindest ein großer Teil des Innendurchmessers des Ringdrehlagers für den Nachlauf genutzt werden. Mit anderen Worten kann der Durchmesser des Ringlagers bei gegebenem Nachlauf besonders klein gewählt werden.

Da es aus Kostengründen vorteilhaft sein kann, vorgefertigte Drehlagerbaugruppen einsetzen zu können, wird in Weiterbildung der Erfindung vorgeschlagen, dass der Achsbolzen der wenigstens einen unangetriebenen Stützrolle an einem inneren Träger der Stützrolleneinheit befestigbar ist, welcher seinerseits mit dem inneren Lagerelement des Drehlagers verbunden ist.

Um die Wartung der Stützrolleneinheit, insbesondere den Austausch der wenigstens einen Stützrolle, die das wichtigste Verschleißteil der Stützrolleneinheit bildet, erleichtern zu können, kann der Achsbolzen der wenigstens einen unangetriebenen Stützrolle an dem inneren Träger von unten befestigbar sein.

Um das Risiko minimieren zu können, dass die wenigstens eine Stützrolle den Kontakt zum Untergrund verliert, der für ihre korrekte Ausrichtung entsprechend der Bewegung des Flurförderzeugs von Bedeutung ist, kann in Weiterbildung der Erfindung vorgesehen sein, dass der innere Träger ein mit dem inneren Lagerelement des Drehlagers verbundenes Basiselement und ein an dem Basiselement um eine im Wesentlichen horizontal verlaufende Achse schwenkbares Schwingenelement umfasst, an dessen freiem Ende der Achsbolzen der wenigstens einen unangetriebenen Stützrolle befestigbar ist. Durch eine entsprechende Schwenkbewegung des Schwingenelements kann die Stützrolle Bewegungen des Flurförderzeugs relativ zum Untergrund ohne Weiteres ausgleichen.

Wenn dabei an dem einen Element, Basiselement oder Schwingenelement, wenigstens ein verstellbares Anschlagelement vorgesehen ist, welches dazu vorgesehen ist, im Zusammenwirken mit einer an dem jeweils anderen Element, Schwingenelement oder Basiselement, vorgesehenen Anschlagfläche die Schwenkbewegung des Schwingenelements zu begrenzen, so kann ein unbeabsichtigter Kontakt der wenigstens einen Stützrolle mit dem Basiselement des inneren Trägers verhindert werden, der zu einer Beschädigung der Rolle und/oder des Basiselements und somit der gesamten Stützrolleneinheit führen könnte. Ferner können durch eine entsprechende Verstellung des Anschlagelements beispielsweise Fertigungstoleranzen des Fahrwerks des Flurförderzeugs ausgeglichen werden, die etwa von einem Schweißverzug herrühren können. Zudem ist es möglich, das Fahrwerk gezielt zu trimmen, beispielsweise den Rahmen des Flurförderzeugs parallel zum Untergrund auszurichten.

Wenn das Schwingenelement zudem im Wesentlichen horizontal verläuft, bewegt sich die wenigstens eine Stützrolle beim Verschwenken des Schwingenelements im Wesentlichen vertikal. Insbesondere kann in diesem Fall die Horizontalbewegung der wenigstens einen Stützrolle vernachlässigt werden, was trotz der Einstellmöglichkeit ein sicheres odometrisches Navigieren ermöglicht, da sich der Radstand des Flurförderzeugs praktisch nicht ändert.

Ferner ist es denkbar, das wenigstens eine Anschlagelement derart einzustellen, dass das Schwingenelement ausgehend von einem exakt horizontalen Verlauf nur hin zu größeren Schwenkwinkeln zwischen dem Schwingenelement und dem Basiselement verschwenkt werden kann. Das hätte den Vorteil, dass die wenigstens eine Stützrolle einen größeren Durchmesser aufweisen könnte. Im Gegenzug müssten dann aber zwei erfindungsgemäße Stützrolleneinheit vorgesehen werden, um beide Fehlerrichtungen ausgleichen zu können.

Das Anschlagelement kann beispielsweise von einer Schraube gebildet sein. Dabei können sowohl Kopfschrauben als auch Gewindestiftschrauben als Anschlagelement eingesetzt werden. Um in jeder Schwenkposition einen Flächenkontakt zwischen dem Anschlagelement und der Anschlagfläche sicherstellen zu können, kann die Schraube vorteilhafterweise als Kugeldruckschraube ausgebildet sein. Ferner kann die Schraube durch Klemmen und/oder Verkleben und/oder Kontern gegen unbeabsichtigtes Verdrehen bzw. Lösen gesichert sein.

Wenigstens ein derartiges Anschlagelement kann beispielsweise an einer zwischen der Schwenkachse und der Rollenachse gelegenen Position angeordnet sein. Auf diese Weise kann das Anschlagelement ein zu starkes Einschwenken der Stützrolle verhindern.

Zusätzlich oder alternativ zu dem wenigstens einen Anschlagelement kann die Stützrolleneinheit ferner zwischen dem Basiselement und dem Schwingenelement wenigstens ein Federelement aufweisen. Die Lage der wenigstens einen Stützrolle kann sich infolge dieses Federelements selbsttätig in Abhängigkeit von der auf sie einwirkenden Belastung einstellen. Beispielsweise können durch ein derartiges Federelement dynamische Stoßbelastungen, wie sie etwa beim Überfahren von Unebenheiten oder Schwellen auftreten, aufgefangen werden. Diese Stoßbelastungen können damit nicht mehr oder nur noch in einem deutlich verminderten Maße auf die Rahmenstruktur und die darin angeordneten Komponenten des Flurförderzeugs einwirken.

Das wenigstens eine Federelement kann beispielsweise von einer Druckfeder oder einem elastischer Puffer, beispielsweise einem Polyurethanpuffer oder Gummipuffer, gebildet sein.

Um auch ein zu starkes Ausschwenken der Stützrolle verhindern zu können, könnte grundsätzlich noch ein weiterer Anschlag vorgesehen sein, welcher auf der von der Rollenachse abgewandten Seite der Schwenkachse angeordnet ist. Vorzugsweise kann der weitere Anschlag jedoch zulassen, dass die Stützrolle zumindest soweit nach unten ausklappt, dass ein Zugriff auf ihren Achsbolzen in einfacher Weise möglich ist. Der weitere Anschlag kann ebenfalls von einem Anschlagelement gebildet sein. Grundsätzlich ist es jedoch auch denkbar, dass er von einer Anschlagfläche des Basiselements gebildet ist.

In Weiterbildung der Erfindung wird vorgeschlagen, dass die Stützrolleneinheit ferner einen äußeren Träger umfasst, an dem das äußere Lagerelement befestigbar ist. Grundsätzlich könnte der äußere Träger mit dem äußeren Lagerelement einstückig ausgebildet sein oder könnte das äußere Lagerelement zur Befestigung unmittelbar an dem Rahmen des Flurförderzeugs ausgebildet sein. Beispielsweise könnte der Rahmen des Flurförderzeugs einen eingefrästen Sitz für das äußere Lagerelement aufweisen. Ein gesonderter äußerer Träger hat jedoch den Vorteil, dass die Stützrolleneinheit als vorgefertigte Baugruppe bereitgestellt werden kann, die als Ganzes an dem Rahmen des Flurförderzeugs befestigt werden kann.

Im Hinblick auf eine in Höhenrichtung kompakte Bauweise sind erfindungsgemäß die Befestigungsstellen, die zur Befestigung der Stützrolleneinheit am Rahmen des Flurförderzeugs vorgesehen sind, innerhalb der Höhenerstreckung der wenigstens einen Stützrolle angeordnet. Auf diese Weise führen die Befestigungsstellen zu keiner Vergrößerung der Bauhöhe der Stützrolleneinheit.

Um eine Beeinträchtigung der Funktion der Scanvorrichtung, deren Scan-Ebene unmittelbar oberhalb der Stützrolleneinheit verläuft, reduzieren, wenn nicht gar vollständig verhindern zu können, wird ferner vorgeschlagen, dass am oberen Ende der Stützrolleneinheit ein Staubdeckel vorgesehen ist, der vorzugsweise an dem äußeren Träger befestigbar ist. Ohne einen derartigen Staubdeckel bestünde die Gefahr, dass von der wenigstens einen Stützrolle aufgewirbelter Staub von der Auswertungs-Software der Scanvorrichtung als Hindernis erkannt werden könnte, was sogar zu einem abrupten Notstopp des Flurförderzeugs führen könnte. Vorteilhafterweise kann der Staubdeckel an dem äußeren Träger verrastet werden.

Nachzutragen ist noch, dass die Bauhöhe der Stützrolleneinheit insgesamt beispielsweise höchstens 75 mm betragen kann. Dabei kann der Durchmesser der wenigstens einen Stützrolle beispielsweise höchstens 75 mm, im Falle des Einsatzes eines Staubdeckels höchstens 70 mm betragen. Hierdurch ist sichergestellt, dass die Stützrolleneinheit vollständig unterhalb des Scan-Bereichs der Scanvorrichtung angeordnet werden kann, der beispielsweise in einer Höhe von 75 mm bis 125 mm angeordnet sein kann.

Nachzutragen ist ferner, dass das Drehlager als Wälzlager, beispielsweise als Kugellager, insbesondere als einreihiges Rillenkugellager, ausgebildet sein kann. Grundsätzlich kann aber auch an den Einsatz von Gleitlagern gedacht werden.

Nachzutragen ist schließlich auch noch, dass auch das innere Lagerelement mit dem inneren Träger einstückig ausgebildet sein kann.

Gemäß einem weiteren Gesichtspunkt betrifft die Erfindung ein Flurförderzeug mit wenigstens zwei erfindungsgemäß ausgebildeten Stützrolleneinheiten. Aufgrund der erfindungsgemäßen Ausbildung der Stützrolleneinheiten können diese vollständig außerhalb, nämlich unterhalb des Scan-Bereichs der Scanvorrichtungen angeordnet werden. Dies ermöglicht es zum einen, bei der Anordnung der Stützrolleneinheiten die volle Breite des Flurförderzeugs auszunutzen, und zum anderen, die Scanvorrichtungen vollständig innerhalb der Fahrzeugkontur anzuordnen. Gleichwohl kann mit nur zwei Scanvorrichtungen, beispielsweise zwei 270°-Scannern, ein 360°-Rundumblick der Scanvorrichtungen bereitgestellt werden, was eine beträchtliche Kostenreduzierung bedeutet.

Vorteilhafterweise kann das Flurförderzeug ein fünfrädriges radarmgestützes Fahrzeug sein. Dabei können zwei Lastrollen am vorderen Ende der Radarme angeordnet sein, kann das Antriebsrad mittig im Bereich des Antriebsteils angeordnet sein, und können sich rechts und links am Antriebsteil zwei erfindungsgemäße Stützrolleneinheiten befinden.

Grundsätzlich kann das Flurförderzeug aber auch ein vierrädriges radarmgestützes Fahrzeug sein, bei welchem das Antriebsrad außermittig angeordnet ist und - verglichen mit dem Fünfrad-Konzept - eine der Stützrolleneinheiten ersetzt.

Die Erfindung wird im Folgenden mit Bezug auf die beigefügten Zeichnungen anhand von Ausführungsformen näher erläutert werden. Es stellt dar:
- Figur 1: eine perspektivische Ansicht eines erfindungsgemäßen Flurförderzeugs;
- Figur 2: eine perspektivische Ansicht von schräg oben einer ersten Ausführungsform einer Stützrolleneinheit des Flurförderzeugs aus Figur 1;
- Figur 3: eine geschnittene Seitenansicht der Stützrolleneinheit der Figur 2;
- Figur 4: eine Explosionsansicht der Stützrolleneinheit der Figur 2;
- Figuren 5 bis 8: geschnittene Seitenansichten einer zweiten Ausführungsform einer Stützrolleneinheit des Flurförderzeugs aus Figur 1, wobei Figur 5 eine neutrale Stellung der Stützrolle, Figur 6 eine eingeschwenkte Stellung der Stützrolle, Figur 7 eine ausgeschwenkte Stellung der Stützrolle und Figur 8 eine Wartungsstellung der Stützrolle zeigen;
- Figur 9: eine perspektivische Ansicht von schräg unten der Stützrolleneinheit der Figuren 5 bis 8; und
- Figur 10: eine geschnittene Seitenansicht einer dritten Ausführungsform einer erfindungsgemäßen Stützrolleneinheit des Flurförderzeugs aus Figur 1 zeigt.

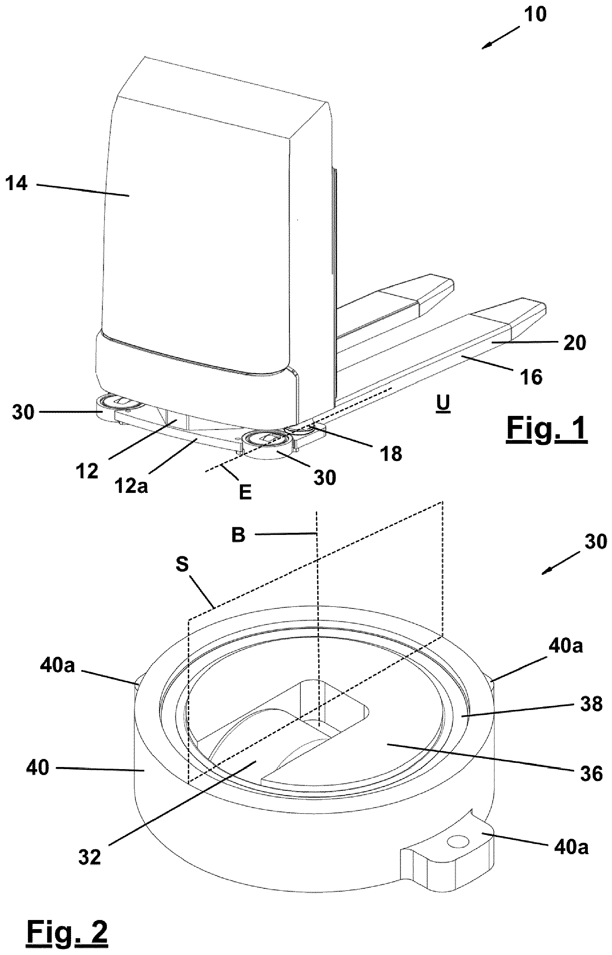

In Figur 1 ist ein Flurförderzeug ganz allgemein mit 10 bezeichnet. Das Flurförderzeug 10 kann beispielsweise ein fahrerloses Flurförderzeug sein, auch AGV (automated guided vehicle) genannt. Es umfasst einen Rahmen 12, an dem ein Gehäuse 14 befestigt ist. In dem Gehäuse 14 sind alle für den Betrieb des Flurförderzeugs 10 erforderlichen Komponenten aufgenommen, insbesondere ein die Bewegung des Flurförderzeugs 10 auf einem Untergrund U ermöglichender Antrieb, ein das Heben und Senken der Hubgabeln 16 ermöglichender Antrieb, die zum Speisen der Antriebe erforderlichen Batterien, eine Steuereinheit zum Ansteuern der Antriebe sowie Sensoren, beispielsweise Scanvorrichtungen 18, zur Erfassung der Umgebung des Flurförderzeugs 10 und dergleichen. In dem dargestellten Ausführungsbeispiel überdecken die Hubgabeln 16 die Radarme 20 des Flurförderzeugs 10, die ebenfalls mit dem Rahmen 12 des Flurförderzeugs 10 verbunden sind.

Unterhalb des Gehäuses 14 und innerhalb der Höhenerstreckung einer Grundplatte 12a des Rahmens 12 sind in den Ecken der Grundplatte 12a zwei erfindungsgemäße Stützrolleneinheiten 30 angeordnet, deren Aufbau nachstehend mit Bezug auf die Figuren 2 bis 4 näher erläutert werden wird.

Jede der Stützrolleneinheiten 30 umfasst eine nicht angetriebene Stützrolle 32, die mittels eines Achsbolzens 34 an einem inneren Träger 36 um eine im Wesentlichen horizontale Rollenachse A drehbar gelagert ist. Der innere Träger 36 ist seinerseits mittels eines Drehlagers 38 an einem äußeren Träger 40 um eine im Wesentlichen vertikale Drehachse B drehbar gelagert. Dabei sind die Rollenachse A und die Drehachse B in einem vorbestimmten, von Null verschiedenen Abstand D voneinander angeordnet, d.h. sie verlaufen windschief zueinander. Auf diese Weise ist die nicht angetriebene Stützrolle 32 bezüglich der Drehachse B mit einem Nachlauf angeordnet, so dass sie stets der Lenkbewegung des Flurförderzeugs 10 folgen kann.

In der dargestellten Ausführungsform ist das Drehlager 38 vollständig innerhalb der Höhenerstreckung H der Stützrolle 32 angeordnet. Auf diese Weise baut die Stützrolleneinheit 30 in Höhenrichtung besonders kompakt und kann somit vollständig unterhalb der Scan-Ebene E der Scanvorrichtungen 18 angeordnet werden (siehe Figur 1).

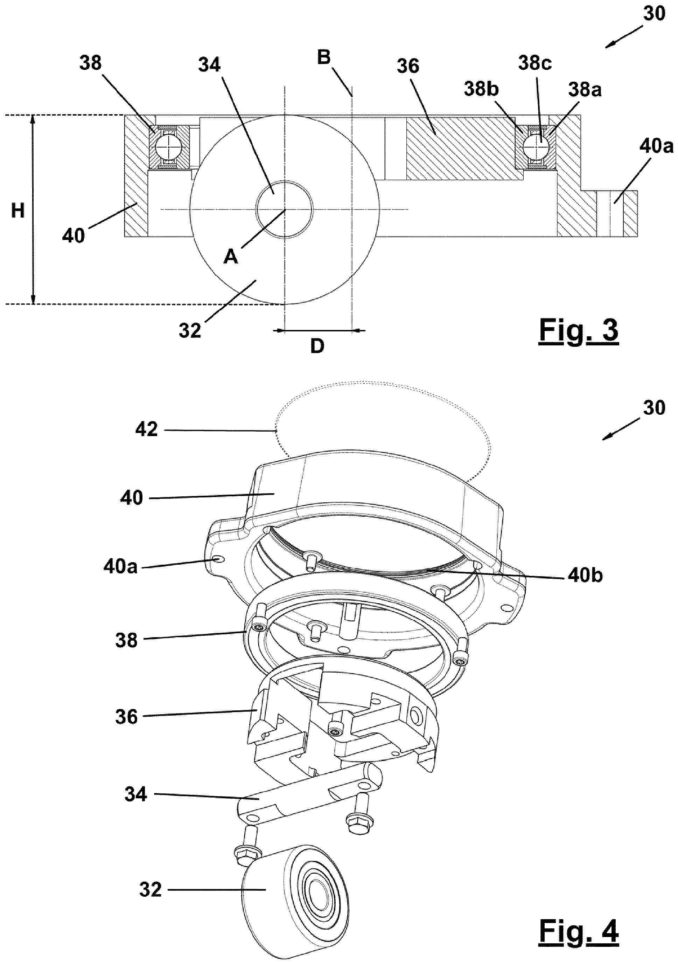

Wie Figur 2 zu entnehmen ist, durchsetzt die Stützrolle 32 eine vertikale Symmetrieebene S des Drehlagers 38, welche die Drehachse B enthält und orthogonal zur Rollenachse A verläuft. Die Symmetrieebene S ist auch die Schnittebene der Figur 3. Auf diese Weise kann der Durchmesser des Drehlagers 38 bei gegebenem Nachlauf der Stützrolle 32 besonders klein gewählt werden, so dass die Stützrolleneinheit 30 auch in der horizontalen Richtung einen kompakten Aufbau aufweist. Ist auf dem Achsbolzen 34 eine Mehrzahl von Stützrollen angeordnet, so können diese der Symmetrieebene S unmittelbar benachbart angeordnet sein.

In Figur 4 ist ferner dargestellt, dass der Achsbolzen 34 der Stützrolle 32 an dem inneren Träger 36 von unten befestigbar ist. Dies ermöglicht es, die Stützrolle 32 nach Verschleiß in einfacher Weise auszutauschen, ohne die gesamte Stützrolleneinheit 10 ausbauen zu müssen.

Nachzutragen ist noch, dass das Drehlager 38 als Ringdrehlager ausgebildet ist mit einem äußeren Lagerelement 38a und einem inneren Lagerelement 38b sowie einer Mehrzahl von mit den beiden Lagerelementen 38a, 38b in Wälzeingriff stehenden Wälzkörpern 38c, beispielsweise Kugeln.

Nachzutragen ist ferner, dass der äußere Träger 40 eine Mehrzahl von Befestigungsstellen 40a aufweist, über die er von unten an der Grundplatte 12a des Rahmens 12 des Flurförderzeugs 10 befestigt werden kann, beispielsweise mit dieser verschraubt werden kann. Auch diese Befestigungsstellen 40a befinden sich vollständig innerhalb der Höhenerstreckung H der Stützrolle 32 und vergrößern somit die Bauhöhe der Stützrolleneinheit 10 nicht.

Gemäß einer in Figur 4 gestrichelt angedeuteten Abwandlung der ersten Ausführungsform kann am oberen Ende der Stützrolleneinheit 10 ein Staubdeckel 42 vorgesehen sein, der beispielsweise in eine Umfangsnut 40b des äußeren Trägers 40 eingerastet werden kann. Dieser Staubdeckel 42 kann verhindern, dass durch die Stützrolle 32 aufgewirbelter Staub in den "Sichtbereich" der Scanvorrichtung gelangt und dort deren Funktion beeinträchtigt.

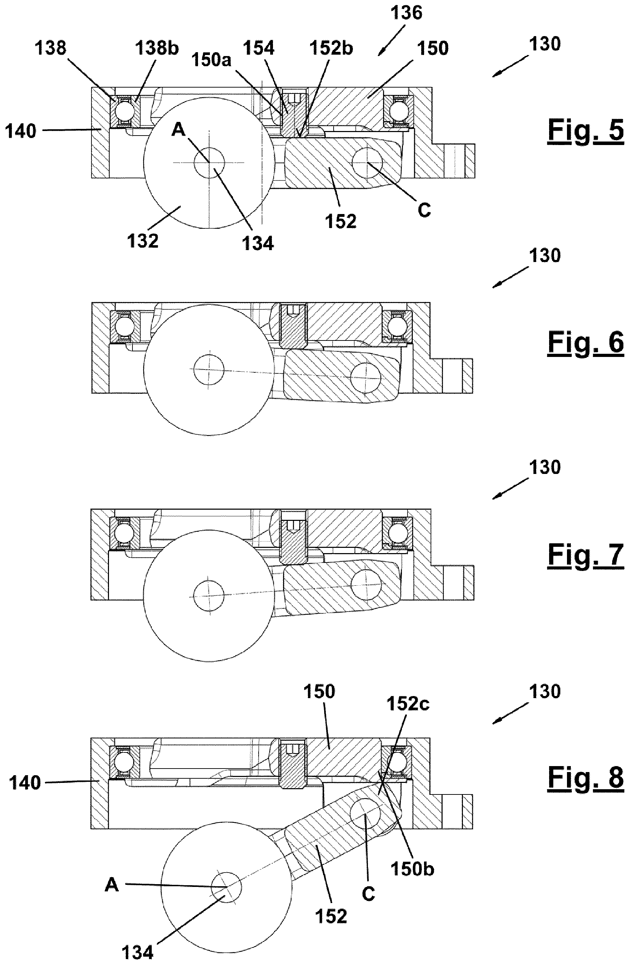

In den Figuren 5 bis 9 ist eine zweite Ausführungsform einer erfindungsgemäßen Stützrolleneinheit dargestellt, die im Wesentlichen der Ausführungsform der Figuren 2 bis 4 entspricht. Daher sind in den Figuren 5 bis 9 analoge Teile mit den gleichen Bezugszeichen versehen, wie in den Figuren 2 bis 4, jedoch vermehrt um die Zahl 100. Zudem wird die Stützrolleneinheit 130 der Figuren 5 bis 9 im Folgenden nur insoweit beschrieben werden, als sie sich von der Stützrolleneinheit 30 der Figuren 2 bis 4 unterscheidet, auf deren Beschreibung hiermit ansonsten ausdrücklich verwiesen sei.

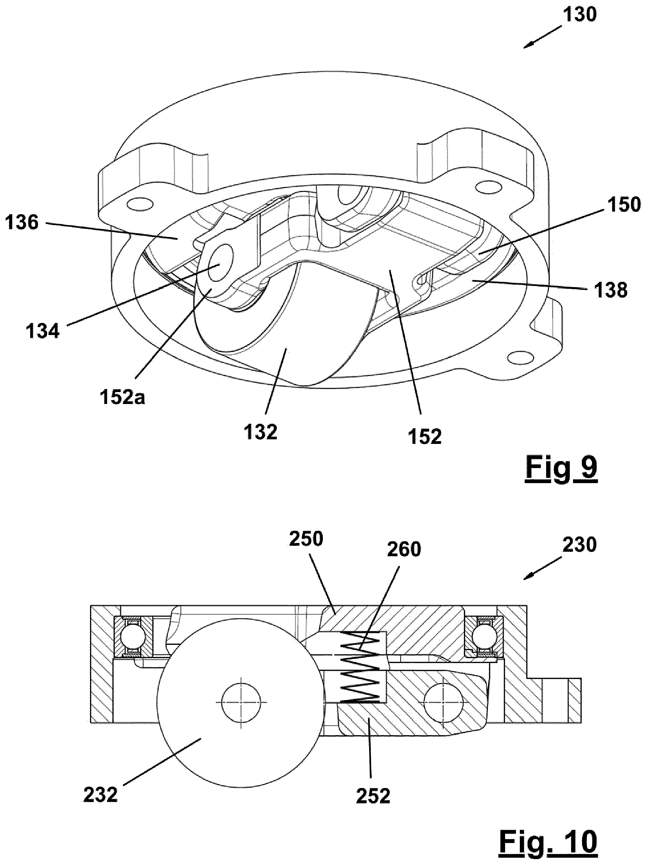

Ein erster Unterschied besteht darin, dass der innere Träger 136 ein mit dem inneren Lagerelement 138b des Drehlagers 138 verbundenes Basiselement 150 und ein an dem Basiselement 150 um eine im Wesentlichen horizontal verlaufende Schwenkachse C schwenkbares Schwingenelement 152 umfasst, an dessen freiem Ende 152a (siehe Figur 9) der Achsbolzen 134 der wenigstens einen unangetriebenen Stützrolle 132 befestigbar ist. Ferner ist an dem Basiselement 150 ein verstellbares Anschlagelement 154 vorgesehen. In dem dargestellten Ausführungsbeispiel ist das Anschlagelement 154 zwischen der Schwenkachse C und der Rollenachse A angeordnet. Ferner ist es von einem Gewindestift gebildet, welcher in eine Gewindebohrung 150a des Basiselements 150 eingeschraubt ist.

Durch das Zusammenwirken des Anschlagelements 154 mit einer an dem Schwingenelement 152 vorgesehenen Anschlagfläche 152b kann die Einschwenkbewegung des Schwingenelements 152 auf ein gewünschtes Maß begrenzt werden. So zeigt Figur 5 beispielsweise eine neutrale Stellung, in der das Schwingenelement 152 im Wesentlichen horizontal angeordnet ist, Figur 6 eine leicht eingeschwenkte Stellung und Figur 7 eine leicht ausgeschwenkte Stellung. Man sieht leicht ein, dass bei einem Verzicht auf die leicht eingeschwenkte Stellung der Figur 6 der Durchmesser der Stützrolle 132 größer gewählt werden kann.

Um ferner verhindern zu können, dass die Stützrolle 132 unkontrolliert nach unten ausklappt, kann ferner ein weiterer Anschlag vorgesehen sein (siehe Figur 8), der von einer Anschlagfläche 152c des Schwingenelements 152 und einer Gegenanschlagfläche 150b des Basiselement 150 gebildet wird. Dieser weitere Anschlag 150b/152c kann auf der von der Rollenachse A abgewandten Seite der Schwenkachse C angeordnet sein. Er ist vorzugsweise derart ausgebildet, dass das Schwingenelement 152 zumindest soweit aus der Stützrolleneinheit 130 ausklappen kann, dass der Achsbolzen 134 unterhalb des äußeren Trägers 140 angeordnet ist, was seine Demontage vereinfacht.

In Figur 10 ist eine dritte Ausführungsform einer erfindungsgemäßen Stützrolleneinheit dargestellt, die im Wesentlichen der Ausführungsform der Figuren 5 bis 9 entspricht. Daher sind in Figur 10 analoge Teile mit den gleichen Bezugszeichen versehen, wie in den Figuren 5 bis 9, jedoch vermehrt um die Zahl 100, d.h. bezogen auf die Figuren 2 bis 4 vermehrt um die Zahl 200. Zudem wird die Stützrolleneinheit 230 der Figur 10 im Folgenden nur insoweit beschrieben werden, als sie sich von der Stützrolleneinheit 130 der Figuren 5 bis 9 unterscheidet, auf deren Beschreibung hiermit ansonsten ausdrücklich verwiesen sei.

Bei der Stützrolleneinheit 230 der Figur 10 ist im Unterschied zur Stützrolleneinheit 130 der Figuren 5 bis 9 ein Federelement 260 zwischen dem Basiselement 250 und dem Schwingenelement 252 angeordnet. Dieses Federelement 260 ermöglicht es der Stützrolle 232, sich auf die auf sie einwirkenden Belastungen einzustellen. Beispielsweise kann das Federelement 260 dynamische Stoßbelastungen auffangen, wie sie etwa beim Überfahren von Unebenheiten oder Schwellen auftreten. In dem dargestellten Ausführungsbeispiel ist das Federelement 260 von einer Druckfeder gebildet. Anstelle dieser Druckfeder könnte aber auch ein elastischer Puffer vorgesehen sein, beispielsweise ein Polyurethanpuffer oder Gummipuffer.

In Weiterbildung der Erfindung ist es auch denkbar, sowohl ein Anschlagelement 154 gemäß der Ausführungsform der Figuren 5 bis 9 als auch ein Federelement 260 gemäß der Ausführungsform der Figur 10 vorzusehen oder alternativ ein kombiniertes Anschlag/Feder-Element. Beispielsweise kann das Federelement 260 in das Anschlagelement 154 integriert sein, etwa als eine die Kugel einer Kugeldruckschraube vorspannende Feder.

Nachzutragen ist noch, dass auch bei den Ausführungsformen der Figuren 5 bis 10 bzw. der kombinierten Ausführungsform ein Staubdeckel vorgesehen sein kann.

## Patentansprüche

1. Flurförderzeug (10), umfassend einen Rahmen (12) und wenigstens eine Stützrolleneinheit (30), umfassend
• wenigstens eine unangetriebene Stützrolle (32) mit einer im Wesentlichen horizontal verlaufenden Rollenachse (A),
• ein Drehlager (38) mit einer im Wesentlichen vertikal verlaufenden Drehachse (B),
wobei die Rollenachse (A) und die Drehachse (B) mit einem vorbestimmten Abstand (D) voneinander angeordnet sind,
das Drehlager (38) als Ringdrehlager mit einem äußeren Lagerelement (38a) und einem relativ zum äußeren Lagerelement (38a) um die Drehachse (B) verdrehbaren inneren Lagerelement (38b) ausgebildet ist,
ein Achsbolzen (34) der wenigstens einen unangetriebenen Stützrolle (32) mittelbar oder unmittelbar an dem inneren Lagerelement (38b) des Drehlagers (38) gelagert ist, und
das Drehlager (38) zumindest teilweise innerhalb der Höhenerstreckung (H) der wenigstens einen unangetriebenen Stützrolle (32) angeordnet ist,
**dadurch gekennzeichnet, dass** das Drehlager (38) vollständig innerhalb der Höhenerstreckung (H) der wenigstens einen unangetriebenen Stützrolle (32) angeordnet ist und
dass die Befestigungsstellen (40a), die zur Befestigung der Stützrolleneinheit (30) am Rahmen (12) des Flurförderzeugs (10) vorgesehen sind, innerhalb der Höhenerstreckung (H) der wenigstens einen Stützrolle (32) angeordnet sind.

2. Flurförderzeug nach Anspruch 1,
**dadurch gekennzeichnet, dass** die wenigstens eine Stützrolle (32) zu einer vertikalen Symmetrieebene (S) des Drehlagers (38), welche die Rollenachse (A) orthogonal schneidet, benachbart angeordnet ist oder diese durchsetzt.

3. Flurförderzeug nach einem der Ansprüche 1 und 2,
**dadurch gekennzeichnet, dass** der Achsbolzen (34) der wenigstens einen unangetriebenen Stützrolle (32) an einem inneren Träger (36) der Stützrolleneinheit (10) befestigbar ist, welcher seinerseits mit dem inneren Lagerelement (38b) des Drehlagers (38b) verbunden ist.

4. Flurförderzeug nach Anspruch 3,
**dadurch gekennzeichnet, dass** der Achsbolzen (34) der wenigstens einen unangetriebenen Stützrolle (32) an dem inneren Träger (36) von unten befestigbar ist.

5. Flurförderzeug nach Anspruch 3 oder 4,
**dadurch gekennzeichnet, dass** der innere Träger (136) ein mit dem inneren Lagerelement (138b) des Drehlagers (138) verbundenes Basiselement (150) und ein an dem Basiselement (150) um eine im Wesentlichen horizontal verlaufende Achse (C) schwenkbares Schwingenelement (152) umfasst, an dessen freiem Ende (152a) der Achsbolzen (134) der wenigstens einen unangetriebenen Stützrolle (132) befestigbar ist.

6. Flurförderzeug nach Anspruch 5,
**dadurch gekennzeichnet, dass** an dem einen Element, Basiselement (150) oder Schwingenelement, wenigstens ein verstellbares Anschlagelement (154) vorgesehen ist, welches dazu vorgesehen ist, im Zusammenwirken mit einer an dem jeweils anderen Element, Schwingenelement (152) oder Basiselement, vorgesehenen Anschlagfläche (152b) die Schwenkbewegung des Schwingenelements (152) zu begrenzen.

7. Flurförderzeug nach Anspruch 6,
**dadurch gekennzeichnet, dass** das Anschlagelement (154) von einer Schraube gebildet ist.

8. Flurförderzeug nach Anspruch 6 oder 7,
**dadurch gekennzeichnet, dass** wenigstens ein Anschlagelement (154) an einer zwischen der Schwenkachse (C) und der Rollenachse (A) gelegenen Position angeordnet ist.

9. Flurförderzeug nach einem der Ansprüche 5 bis 8,
**dadurch gekennzeichnet, dass** zwischen dem Basiselement (250) und dem Schwingenelement (252) wenigstens ein Federelement (260) vorgesehen ist.

10. Flurförderzeug nach einem der Ansprüche 6 bis 9,
**dadurch gekennzeichnet, dass** wenigstens ein weiterer Anschlag (150b/152c) auf der von der Rollenachse (A) abgewandten Seite der Schwenkachse (C) angeordnet ist.

11. Flurförderzeug nach einem der Ansprüche 1 bis 10,
**dadurch gekennzeichnet, dass** sie ferner einen äußeren Träger (40) umfasst, an dem das äußere Lagerelement (38a) befestigbar ist.

12. Flurförderzeug nach einem der Ansprüche 1 bis 11,
**dadurch gekennzeichnet, dass** am oberen Ende der Stützrolleneinheit (30) ein Staubdeckel (42) vorgesehen ist, der vorzugsweise an dem äußeren Träger (40) befestigbar ist.

## Claims

1. Industrial truck (10), comprising a frame (12) and at least one support roller unit (30), comprising
• at least one non-driven support roller (32) having a substantially horizontally extending roller axis (A),
• a pivot bearing (38) having a substantially vertically extending axis of rotation (B),
the roller axis (A) and the axis of rotation (B) being arranged spaced apart from one another at a predetermined spacing (D),
the pivot bearing (38) is designed as an annular pivot bearing having an outer bearing element (38a) and an inner bearing element (38b) that is rotatable relative to the outer bearing element (38a), about the axis of rotation (B),
an axle pin (34) of the at least one non-driven support roller (32) is mounted indirectly or directly on the inner bearing element (38b) of the pivot bearing (38), and
the pivot bearing (38) is arranged at least in part within the height extension (H) of the at least one non-driven support roller (32),
**characterised in that** the pivot bearing (38) is arranged completely within the height extension (H) of the at least one non-driven support roller (32), and
**in that** the fastening points (40a) which are provided for fastening the support roller unit (30) on the frame (12) of the industrial truck (10) are arranged within the height extension (H) of the at least one support roller (32).

2. Industrial truck according to claim 1,
**characterised in that** the at least one support roller (32) is arranged adjacently to or passes through a vertical plane of symmetry (S) of the pivot bearing (38) which orthogonally intersects the roller axis (A).

3. Industrial truck according to either of claims 1 and 2,
**characterised in that** the axle pin (34) of the at least one non-driven support roller (32) can be fastened to an inner carrier (36) of the support roller unit (10), which is in turn connected to the inner bearing element (38b) of the pivot bearing (38b).

4. Industrial truck according to claim 3,
**characterised in that** the axle pin (34) of the at least one non-driven support roller (32) can be fastened to the inner carrier (36) from below.

5. Industrial truck according to either claim 3 or claim 4,
**characterised in that** the inner carrier (136) comprises a base element (150) that is connected to the inner bearing element (138b) of the pivot bearing (138), and a swing arm element (152) which is pivotable on the base element (150) about a substantially horizontally extending axis (C), at the free end (152a) of which swing arm element the axle pin (134) of the at least one non-driven support roller (132) can be fastened.

6. Industrial truck according to claim 5,
**characterised in that** at least one adjustable stop element (154) is provided on the one element, base element (150) or swing arm element, which stop element is provided for limiting the pivot movement of the swing arm element (152) in interaction with a stop surface (152b) provided on the respective other element, swing arm element (152) or base element.

7. Industrial truck according to claim 6,
**characterised in that** the stop element (154) is formed by a screw.

8. Industrial truck according to either claim 6 or claim 7,
**characterised in that** at least one stop element (154) is arranged at a position located between the pivot axis (C) and the roller axis (A).

9. Industrial truck according to any of claims 5 to 8,
**characterised in that** at least one spring element (260) is provided between the base element (250) and the swing arm element (252).

10. Industrial truck according to any of claims 6 to 9,
**characterised in that** at least one further stop (150b/152c) is arranged on the side of the pivot axis (C) remote from the roller axis (A).

11. Industrial truck according to any of claims 1 to 10,
**characterised in that** it further comprises an outer carrier (40), on which the outer bearing element (38a) can be fastened.

12. Industrial truck according to any of claims 1 to 11,
**characterised in that** a dust cover (42) is provided at the upper end of the support roller unit (30), which dust cover can preferably be fastened on the outer carrier (40).

## Revendications

1. Chariot de manutention (10), comprenant un châssis (12) et au moins une unité de rouleau d'appui (30), comprenant
• au moins un rouleau d'appui non entraîné (32), ayant un axe de rouleau (A) s'étendant sensiblement horizontalement,
• un palier de rotation (38), ayant un axe de rotation (B) s'étendant sensiblement verticalement,
dans lequel
l'axe de rouleau (A) et l'axe de rotation (B) sont disposés à une distance prédéterminée (D) l'un de l'autre,
le palier de rotation (38) est conçu comme un palier de rotation annulaire ayant un élément de palier extérieur (38a) et un élément de palier intérieur (38b) pouvant tourner autour de l'axe de rotation (B) par rapport à l'élément de palier extérieur (38a),
un axe-pivot (34) dudit au moins un rouleau d'appui non entraîné (32) est monté directement ou indirectement sur l'élément de palier intérieur (38b) du palier de rotation (38), et
le palier de rotation (38) est disposé au moins partiellement à l'intérieur de l'extension en hauteur (H) dudit au moins un rouleau d'appui non entraîné (32),
**caractérisé en ce que**
le palier de rotation (38) est disposé entièrement à l'intérieur de l'extension en hauteur (H) dudit au moins un rouleau d'appui non entraîné (32), et
**en ce que** les points de fixation (40a) prévus pour fixer l'unité de rouleau d'appui (30) sur le châssis (12) du chariot de manutention (10) sont disposés à l'intérieur de l'extension en hauteur (H) dudit au moins un rouleau d'appui (32).

2. Chariot de manutention (10) selon la revendication 1,
**caractérisé en ce que** ledit au moins un rouleau d'appui (32) est disposé au voisinage de ou à travers un plan de symétrie vertical (S) du palier de rotation (38) qui coupe orthogonalement l'axe de rouleau (A).

3. Chariot de manutention selon l'une des revendications 1 et 2,
**caractérisé en ce que** l'axe-pivot (34) dudit au moins un rouleau d'appui non entraîné (32) peut être fixé à un support intérieur (36) de l'unité de rouleau d'appui (10), qui est lui-même relié à l'élément de palier intérieur (38b) du palier de rotation (38b).

4. Chariot de manutention selon la revendication 3,
**caractérisé en ce que** l'axe-pivot (34) dudit au moins un rouleau d'appui non entraîné (32) peut être fixé au support intérieur (36) par le bas.

5. Chariot de manutention selon la revendication 3 ou 4,
**caractérisé en ce que** le support intérieur (136) comprend un élément de base (150), relié à l'élément de palier intérieur (138b) du palier de rotation (138), et un élément formant bielle (152) qui peut pivoter sur l'élément de base (150) autour d'un axe (C) sensiblement horizontal et à l'extrémité libre (152a) duquel peut être fixé l'axe-pivot (134) dudit au moins un rouleau d'appui non entraîné (132).

6. Chariot de manutention selon la revendication 5,
**caractérisé en ce qu'**il est prévu, sur l'un des éléments parmi l'élément de base (150) et l'élément formant bielle, au moins un élément de butée réglable (154) qui est prévu pour limiter le mouvement de pivotement de l'élément formant bielle (152) en coopération avec une surface de butée (152b) prévue sur l'autre élément respectif parmi l'élément formant bielle (152) et l'élément de base.

7. Chariot de manutention selon la revendication 6,
**caractérisé en ce que** l'élément de butée (154) est formé par une vis.

8. Chariot de manutention selon la revendication 6 ou 7,
**caractérisé en ce qu'**au moins un élément de butée (154) est disposé à une position située entre l'axe de pivotement (C) et l'axe de rouleau (A).

9. Chariot de manutention selon l'une des revendications 5 à 8,
**caractérisé en ce qu'**au moins un élément de ressort (260) est prévu entre l'élément de base (250) et l'élément formant bielle (252).

10. Chariot de manutention selon l'une des revendications 6 à 9,
**caractérisé en ce qu'**au moins une autre butée (150b/152c) est disposée sur le côté de l'axe de pivotement (C) détourné de l'axe de rouleau (A).

11. Chariot de manutention selon l'une des revendications 1 à 10,
**caractérisé en ce qu'**il comprend en outre un support extérieur (40) sur lequel peut être fixé l'élément de palier extérieur (38a).

12. Chariot de manutention selon l'une des revendications 1 à 11,
**caractérisé en ce qu'**un couvercle anti-poussière (42) est prévu à l'extrémité supérieure de l'unité de rouleau d'appui (30), lequel peut de préférence être fixé au support extérieur (40).
